# EUROPEAN PATENT SPECIFICATION

(11) **EP 0 585 647 B1**
(45) Date of publication and mention of the grant of the patent: **08.10.1997**
(21) Application number: 93112572.8
(22) Date of filing: 05.08.1993
(51) Int. Cl.: B29D 30/36, B29D 30/08

(54) **Road vehicle tire inner stitching device**
Vorrichtung zum Heften eines Strassenfahrzeugluftreifens von innen her
Dispositif pour la fixation de l'intérieur d'un pneumatique pour un véhicule routier

(30) Priority: 04.09.1992 IT TO920740
(43) Date of publication of application: 09.03.1994
(73) Proprietor: BRIDGESTONE CORPORATION, Tokyo 104 (JP)
(72) Inventor: Siegenthaler, Karl J., I-00100 Roma (IT)
(74) Representative: Jorio, Paolo, Dr. Ing.

(56) References cited:
- EP-A- 0 505 814
- US-A- 4 398 492

## Description

The present invention relates to a road vehicle tire inner stitching device.

EP-A-0 507 111, which has to be considered under the terms of Article 54(3) EPC, relates to an inner stitching device for road vehicle tires, the stitching device cooperating with an annular tire forming mold and comprising at least one stitching unit, in turn comprising roller means having an outer stitching surface and rotating about a first axis, a support for said roller means, and first actuating means for moving the first axis to and from an operating position wherein said stitching surface contacts the inner surface of the tire; and first drive means for producing a first relative rotation of the stitching unit and the tire about a second axis substantially coinciding with the axis of the tire.

The roller means of the known device described above are defined by a number of rollers having different external profiles and each designed to contact a specific annular inner surface portion of the tire.

Though satisfactory as regards uniform, accurate stitching of the outer surface of the green tire on to the inner surface of the forming mold, the above known device is of complex, relatively high-cost design, due to the presence of a relatively large number of rollers designed to move to and from said operating position contacting the inner surface of the tire. Moreover, by simply rolling over the inner surface of the tire and applying no more than substantially radial pressure at the point of contact, said rollers normally fail to eliminate any unevenness in the thickness of the tire walls. In other words, the above known device does not always provide for adequately controlling the shape, not only of the outer surface, but also of the inner surface of the tire, and of the position of the inner surface in relation to the outer surface.

Moreover, as with other inner stitching devices of the type described in Japanese Patent Application n. 45-28499 (DATABASE WPI, No. 70-65218R (37), Derwent Week 37/1970), the above known device fails to provide for both inner stitching of the undercut portions of the inner surface of the tire, i.e. the inner surface of the bead portions, and removal of any air pockets between the layers of the tire.

It is an object of the present invention to provide a perfected stitching device designed to overcome the aforementioned drawbacks.

According to the present invention, there is provided an inner stitching device for road vehicle tires, the stitching device cooperating with an annular tire forming mold and comprising at least one stitching unit, in turn comprising roller means having an outer stitching surface and rotating about a first axis, a support for said roller means, and first actuating means for moving the first axis to and from an operating position wherein said stitching surface contacts the inner surface of the tire; and first drive means for producing a first relative rotation of the stitching unit and the tire about a second axis substantially coinciding with the axis of the tire; characterized by further comprising second drive means for producing a second relative rotation of the stitching unit and the tire about a third substantially transverse axis in relation to said first and second axes; said roller means comprising a single roller having an outer stitching surface relatively narrow as compared with said inner surface of the tire.

By virtue of the width of the roller on the above stitching device and combined dual rotation of the stitching unit in relation to the tire, the roller, during stitching, travels over the inner surface of the tire along a substantially helical path, and therefore presents at all times a transverse component substantially parallel to the first axis, i.e. its own axis of rotation. As such, the roller not only compresses the tire radially at all times against the inner surface of the forming mold at the point of contact between the stitching surface of the roller and the inner surface of the tire, but also exerts a transverse "smearing" action on the inner surface of the tire for spreading the elastomeric material and so eliminating any unevenness in the thickness of the tire walls.

Moreover, by virtue of said combined dual rotation of the stitching unit in relation to the tire, the roller travels over the entire inner surface of the tire, including the inner surface of the bead portions.

Finally, as it travels along said helical path, the roller acts progressively on the tire for gradually displacing and expelling any air pockets between the inner layers of the tire.

A number of non-limiting embodiments of the present invention will be described by way of example with reference to the accompanying drawings, in which:
Fig.s 1 and 2 show schematic views in perspective of a preferred embodiment of the stitching device according to the present invention in two successive operating positions;
Fig.3 shows an enlarged, partially sectioned view in perspective, with parts removed for simplicity, of a detail in Fig.2;
Fig.s 4 and 5 show enlarged cross sections of a detail in Fig.3 in two successive operating positions;
Fig.6 shows a view in perspective of the Fig.4-5 detail;
Fig.7 shows a view in perspective of a first variation of the Fig.6 detail;
Fig.8 shows a view in perspective of a second variation of the Fig.6 detail.

Number 1 in Fig.s 1 and 2 indicates an inner stitching device for a green tire 2 (Fig.s 3, 4 and 5) housed inside the toroidal chamber 3 of an annular forming mold 4 of the type described in EP-A-0 540 049, which is to be considered under the terms of Article 54 (3)(4) EPC.

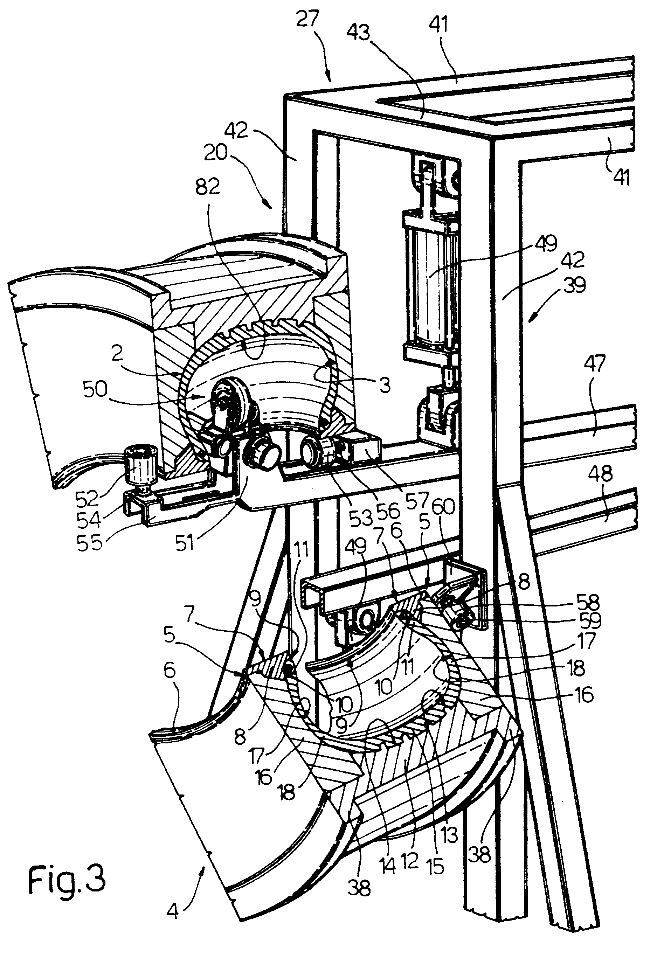

As shown more clearly in Fig.3, mold 4 comprises two inner annular supports 5, each comprising a ring 6 defined internally by a cylindrical surface 7 defining a respective opening enabling access to chamber 3. Each annular support 5 presents an outer annular rib 8, the lateral surface of which facing the other annular support 5 defines, together with an outer surface portion of ring 6 defined internally by annular edge 9, a cavity 10 forming part of the surface of chamber 3 and designed to receive a respective bead portion 11 of tire 2. Mold 4 also comprises an outer annular element 12, the inner surface 13 of which presents sunken portions 14 and provides for forming the externally engraved tread portion 15 of tire 2. Finally, mold 4 comprises two substantially flat annular lateral walls 16 located between annular supports 5 and outer annular element 12, and defined internally by respective concave surfaces 17 designed to contact respective sidewalls 18 of tire 2.

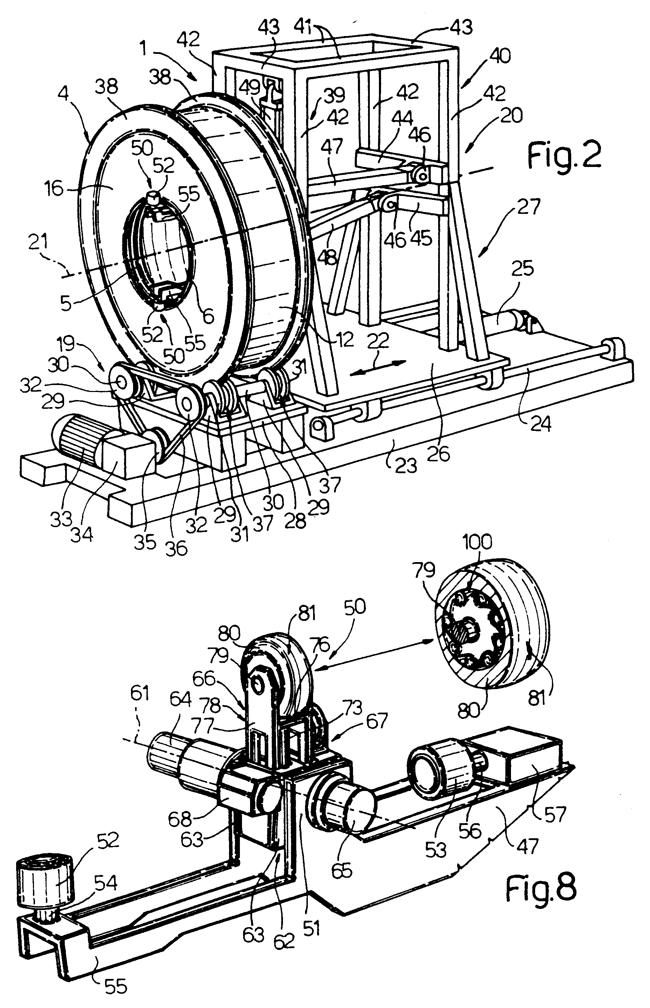

As shown in Fig.s 1 and 2, device 1 comprises a drive device 19 for mold 4; and a device 20 for internally stitching tire 2 housed inside chamber 3 of mold 4 supported on device 19 in the Fig.2 operating position and rotated by device 19 about axis 21 coaxial with cylindrical surfaces 7.

Devices 19 and 20 are supported, in line with each other in direction 22, on the same base 23, which also supports two slideways 24 parallel to direction 22 and along which a carriage 26 supporting the frame 27 of device 20 is moved to and from device 19 by a known actuator 25 (Fig.2). Device 19, on the other hand, is mounted in a fixed position on base 23, and comprises a base plate 28 integral with base 23 and fitted on top with two pairs of forks 29 supporting two rotary shafts 30, each parallel to direction 22 and fitted with two rollers 31 and a pulley 32. Device 19 also comprises a reversible electric motor 33 for driving, via a reduction gear 34, a pulley 35 having its axis parallel to direction 22 and in turn driving shafts 30 via a belt 36 looped about pulleys 32 and 35. Each roller 31 is aligned, perpendicular to direction 22, with a corresponding roller 31 on the other shaft 30, and presents a circumferential groove 37 for receiving, together with groove 37 of the corresponding roller 31, a respective circumferential rib 38 projecting outwards of outer annular element 12 of mold 4.

In other words, device 19 provides for supporting mold 4 on rollers 31 with its axis 21 parallel to direction 22 and in an axially-fixed position in relation to base 23, and to rotate mold 4 in either direction about axis 21.

As shown in Fig.s 1 and 2, frame 27 comprises two portals 39 and 40 aligned in and transversely in relation to direction 22, with portal 39 at the front between portal 40 and device 19. Portals 39 and 40 are connected at the top by two cross members 41, and each comprise two uprights 42 connected by a cross member 43 coplanar and perpendicular to cross members 41. Rear portal 40 presents a further two intermediate cross members 44 and 45 parallel to cross member 43 and arranged one over the other. Cross members 44 and 45 support respective intermediate forks 46 to which are connected the rear ends of two arms 47 and 48 substantially parallel to each other and to direction 22, and arranged one over the other so as to rotate, in relation to respective forks 46, about respective substantially horizontal axes perpendicular to direction 22, and by virtue of respective substantially vertical, coaxial actuators 49 located respectively between a front portion of arm 47 and cross member 43 of portal 39, and between a front portion of arm 48 and carriage 26.

Arms 47 and 48 present a front portion projecting frontwards of portal 39, and each support on the front end a respective stitching unit 50 mounted on a respective transverse, substantially vertical fork 51 projecting from the opposite surface of arm 47, 48 to that facing the other arm 48, 47. Fork 51 of arm 47 is located between two rollers 52 and 53 projecting from arm 47 on the same side as fork 51. Roller 52 is mounted for rotation on a pin 54 parallel to fork 51 and fitted to an appendix 55 extending axially from the free end of arm 47; and roller 53 is mounted for rotation on a pin 56 parallel to arm 47, perpendicular to pin 54, and fitted to a block 57 integral with arm 47. Similarly, arm 48 also presents an appendix 55, a pin 54 and a roller 52, but no roller 53. As shown in Fig.s 1 and 3, for each roller 52, frame 27 presents a roller 58 mounted for rotation on a respective pin 59 parallel to the plane defined by uprights 42 of portal 39, and fitted to a respective bracket 60 integral with a respective upright 42 of portal 39.

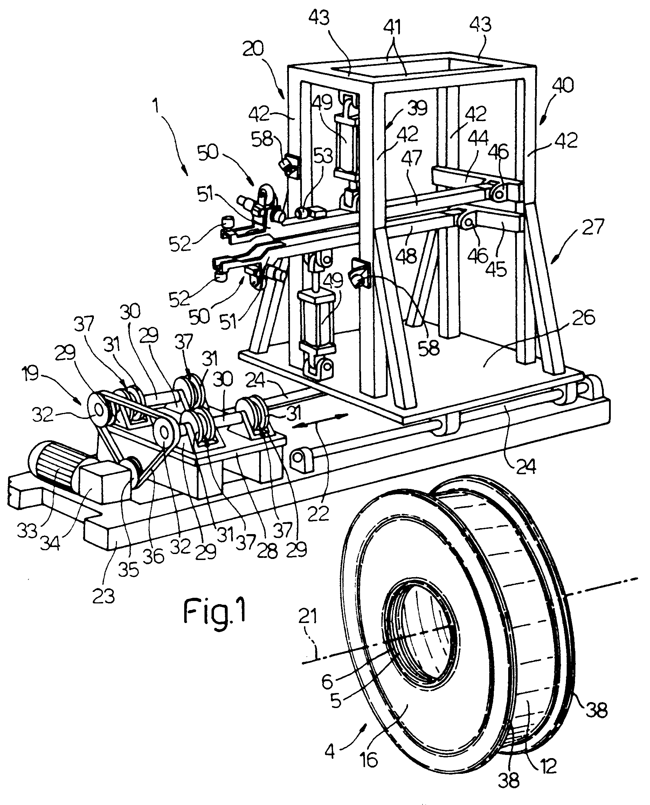

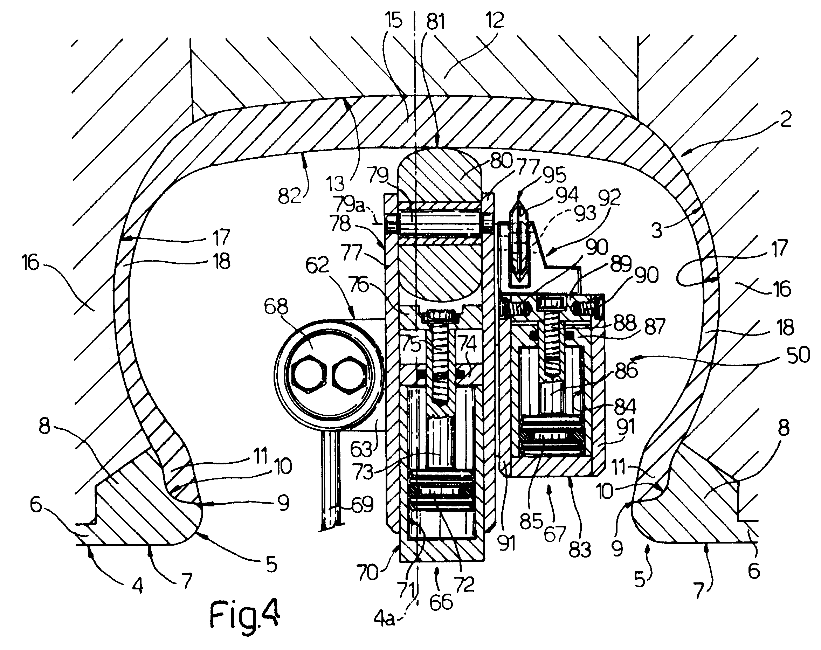

With reference to Fig.1, it should be pointed out that units 50 on either side of axis 21 are not positioned exactly over each other, but are slightly offset along axis 21 so that, when arms 47 and 48 are parted as shown in Fig.3, units 50 are positioned on either side of the vertical plane of symmetry 4a (Fig.4) of mold 4 (perpendicular to axis 21), with unit 50 of arm 47 on the same side of plane 4a in relation to portal 39.

For internally stitching tire 2 housed inside forming mold 4, mold 4 (Fig.1) is fed towards device 1 and loaded on to device 19 with ribs 38 engaged inside grooves 37 of rollers 31 by which it is both supported and locked axially in an operating position wherein axis 21 is substantially aligned with and extends between arms 47 and 48.

For ensuring the above position of axis 21 in relation to device 20, according to a variation (not shown), an adjustable lifting device (not shown) is inserted between device 19 and base 23.

When loading mold 4 into the above operating position, stitching device 20 is maintained in the idle position shown in Fig.1, wherein frame 27 is backed up so that arms 47 and 48 are clear of mold 4, and actuators 49 maintain arms 47 and 48 in the closed position substantially parallel to axis 21. When arms 47 and 48 are closed, the total width of arms 47 and 48 and respective stitching units 50 is less than the diameter of the openings defined by cylindrical surfaces 7 of mold 4.

Upon mold 4 being loaded into the operating position on device 19, actuator 25 is operated for moving frame 27 into a forward operating position, wherein units 50 are set to the work position inside chamber 3, rollers 58 are positioned contacting the outer surface of lateral wall 16 of mold 4 facing portal 39, and rollers 52 are located outside and on the opposite side of mold 4 in relation to portal 39. Actuators 49 are then operated for setting arms 47 and 48 to the parted operating position, wherein roller 53 contacts surface 7 of annular support 5 facing portal 39, and rollers 52 contact the outer surface of lateral wall 16 of mold 4 opposite that facing portal 39, so as to lock device 20 in relation to mold 4 in a position, hereinafter referred to as the "operating position", wherein device 20 and stitching units 50 may be operated for internally stitching tire 2. In connection with the above, it should be pointed out that, as arms 47 and 48 are parted, units 50 move in opposite directions, and substantially radially in relation to axis 21, from their respective work positions into respective operating positions inside chamber 3.

With reference to Fig.s 4 to 6, each unit 50 is inserted between the arms of respective fork 51 so as to rotate about a respective axis 61 substantially perpendicular to respective arm 47, 48 and crosswise in relation to axis 21, and comprises a frame 62 defined by two plates 63 (only one of which is shown in Fig.s 4 and 5) perpendicular to axis 61 and integral with each other. Plates 63 are fitted integral with two shafts (not shown) coaxial with axis 61 and extending through the opposite arms of respective form 51, so as to define the fulcrum about which respective unit 50 rotates. One of said shafts (not shown) constitutes the output shaft of a motor 64 supported on respective fork 51, while the other (not shown) constitutes the input shaft of an encoder 65 for synchronizing, via a known control unit not shown, rotation of units 50 about respective axes 61 as explained later on.

Each unit 50 also comprises a stitching element 66 and a cutting element 67, both operated pneumatically, parallel to each other and perpendicular to axis 61, and supported side by side between plates 63 together with a distributor 68 for selectively connecting elements 66 and 67 to a pneumatic circuit 69 supplying pressurized fluid.

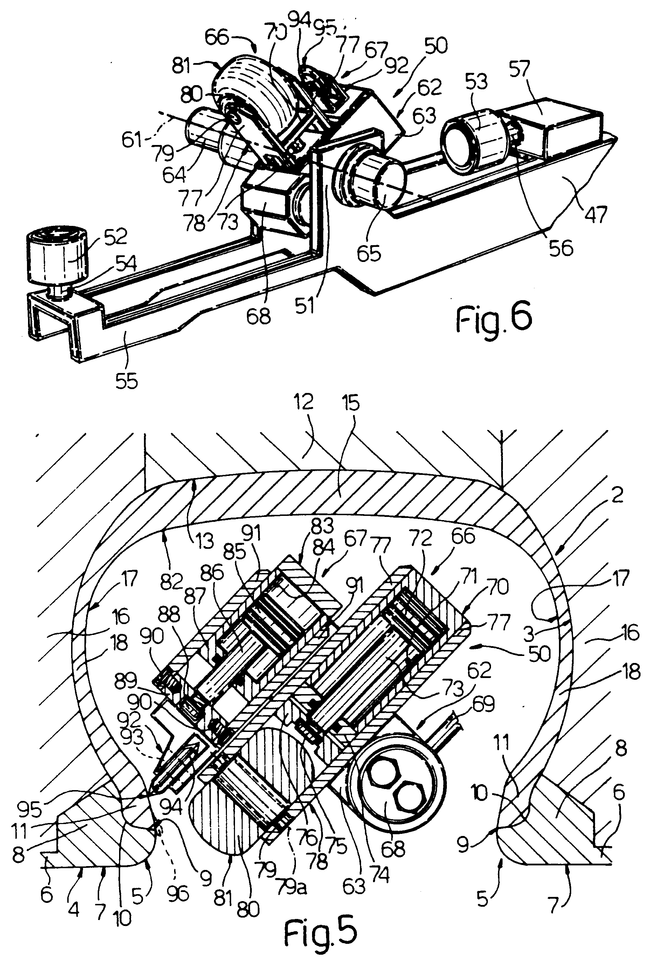

Element 66 comprises a hollow, rectangular-section body 70 having a chamber 71 inside which slides a piston 72 fitted with an axial rod 73 projecting from body 70 through a hole in end wall 74 of body 70 and fitted, via an axial screw 75, with a crosspiece 76 connecting the two arms 77 of a fork 78. Fork 78 moves with piston 72 between a withdrawn idle position (Fig.5) and an extracted operating position (Fig.4), and arms 77 extend outwards of body 70 and cooperate in sliding manner with the outer surface of body 70 for guiding fork 78 prismatically between said withdrawn and extracted positions. On the opposite end to that fitted to body 70, arms 77 support a fixed pin 79 having an axis 79a parallel to plates 63 and perpendicular to axis 61, and supporting for rotation a roller 80. Roller 80 presents a convex outer surface 81, and moves with piston 72 to and from an extracted operating position (Fig.4) wherein surface 81 contacts and exerts a given pressure on the inner surface 82 of tire 2. As shown in Fig.s 4 and 5, the width of surface 81 is relatively small as compared with that of surface 82.

Element 67 comprises a hollow, rectangular-section body 83 having a chamber 84 inside which slides a piston 85 fitted with an axial rod 86 projecting from body 83 through a hole in end wall 87 of body 83, adjacent to wall 74, and fitted, via an axial screw 88, with a crosspiece 89 connecting, by means of screws 90, two guide arms 91 moving with piston 85 between a withdrawn position (Fig.4) and an extracted position (Fig.4), and cooperating in sliding manner with the outer surface of body 83. On the opposite side to that fitted to rod 86, crosspiece 89 is fitted with a fork 92 supporting a fixed pin 93 parallel to pin 79 and supporting for rotation a cutting disk 94 with a cutting edge 95. Disk 94 moves with piston 85 to and from an extracted operating position (Fig.5) wherein edge 95 contacts and exerts a given pressure on the inner surface 82 of tire 2. Elements 66 and 67 are so sized that, when piston 72 is withdrawn, as in the Fig.5 operating position, disk 94 may be moved by piston 85 into an extracted position wherein edge 95 projects outwards of surface 81 of roller 80.

Operation of device 1 will now be described as of when stitching device 20 is locked in said "operating position" in relation to mold 4 mounted on drive device 19.

Motor 33 of device 19 is activated for rotating mold 4 anticlockwise (in Fig.2) about its axis 21; and, via distributors 68, the two stitching elements 66 are activated so as to move rollers 80 (Fig. 4) from the initial withdrawn idle position (Fig.5) into the extracted operating position, wherein surface 81 of each roller 80 contacts a respective relatively small portion of inner surface 82 of tire 2, on which it exerts a given substantially constant pressure corresponding to the pressure in pneumatic circuit 69. In this position, the friction between rollers 80 and tire 2 causes each roller 80 to rotate about axis 79a (anticlockwise in Fig.6 relative to unit 50 of arm 47).

On first contacting surface 82, rollers 80 present axes 79a parallel to each other and to axis 21 and perpendicular to plane 4a, and, when respective motors 64 are activated, rotate gradually, with respective frames 62 and controlled by encoders 65, in opposite directions about respective axes 61 and through plane 4a. Rollers 80 thus roll over surface 82 along respective helical paths which overlap at a central inner surface portion of tread portion 15.

The manner in which tire 2 is stitched internally by rollers 80 against the inner surface of chamber 3 will now be described with reference to Fig.s 4, 5 and 6, and, for the sake of simplicity, with reference to unit 50 of arm 47.

As shown in Fig.4, unit 50, with roller 80 in the extracted position contacting surface 82, and disk 94 in the withdrawn position, is rotated anticlockwise by motor 64 so as to gradually stitch tire 2 against the surface of chamber 3 commencing from tread portion 15. As roller 80 nears the joint between tread portion 15 and sidewall 18, piston 72 moves gradually towards wall 74 so as to maintain a constant contact pressure on surface 82. As sidewall 18 is stitched, the position of piston 72 inside chamber 71 is maintained substantially constant, while a central portion of outer surface 81 of roller 80 rolls over the inner surface of sidewall 18, so as to gradually spread and dislodge, towards bead portion 11, any excess material in tire 2 and any air pockets between the layers (not shown) of tire 2 and/or between tire 2 and the inner surface of mold 4. The above action continues until roller 80 reaches bead portion 11, at which point the curvature of surface 82 and the distance between surface 82 and axis 61 decrease sharply to form an inflection at which roller 80 presents a lateral portion of surface 81 contacting surface 82. Said lateral portion moves transversely, with considerable sliding friction, along bead portion 11, so as to exert a strong "smearing" action along the inner surface of portion 11. This results in considerable local heating of tire 2, thus enabling all the excess material to be spread along portion 11 into a burr 96 which is rolled by roller 80 beyond annular edge 9.

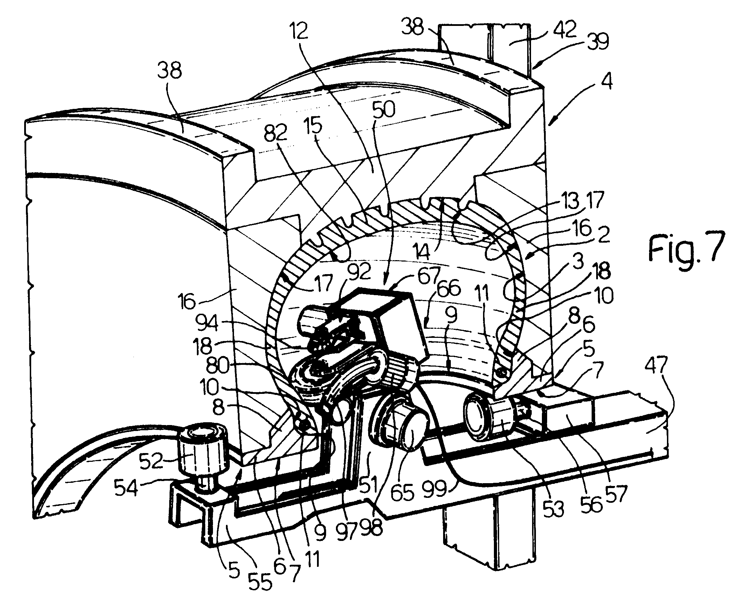

In the Fig.7 variation, formation and displacement of burr 96 are assisted by fitting unit 50 with an ejector 97 having a heating element 98 and connected to a compressed air circuit 99 for feeding hot air on to the portion subjected to the action of roller 80.

In the Fig.8 variation, formation and displacement of burr 96 are assisted by fitting a known free wheel 100 between pin 79 and roller 80, so that roller 80 rotates freely anticlockwise, but is locked if rotated clockwise. Consequently, by inverting motor 33 when roller 80 reaches bead portion 11, the friction produced by locking roller 80 results in considerable heating of bead portion 11 for assisting formation of burr 96.

As shown in Fig.5, when roller 80 passes edge 9, distributor 68 is activated for restoring piston 72 to the withdrawn position, and moving disk 94 into the extracted position with edge 95 contacting surface 82 at bead portion 11. Moving transversely over surface 82, disk 94 cuts off burr 96 at edge 9, so as to form a non-rounded acute angle profile on the inner end of bead portion 11, which is of great advantage in the case of tubeless tires.

In connection with the above, it should be pointed out that cutting element 67 is in no way compulsory, in that, if sufficiently high temperatures are achieved, burr 96 may be removed directly by roller 80.

Another point to note is that, whereas the provision of two opposed stitching units 50 rotating in opposite directions about respective axes 61 provides for reducing stitching time, tire 2 may of course be stitched internally using one unit 50 rotating alternately in different directions about axis 61, commencing from a position wherein roller 80 is arranged contacting the central inner surface portion of tread portion 15.

## Claims

1. An inner stitching device (1) for road vehicle tires (2), the stitching device (1) cooperating with an annular tire forming mold (4) and comprising at least one stitching unit (50), in turn comprising roller means (80) having an outer stitching surface (81) and rotating about a first axis (79a), a support (62) for said roller means (80), and first actuating means (70, 72) for moving the first axis (79a) to and from an operating position wherein said stitching surface (81) contacts the inner surface (82) of the tire (2); and first drive means (19) for producing a first relative rotation of the stitching unit (50) and the tire (2) about a second axis (21) substantially coinciding with the axis (21) of the tire (2); second drive means (64) for producing a second relative rotation of the stitching unit (50) and the tire (2) about a third substantially transverse axis (61) in relation to said first (79a) and second (21) axes; said roller means (80) comprising a single roller (80) having an outer stitching surface (81) relatively narrow as compared with said inner surface (82) of the tire (2).

2. An inner stitching device as claimed in Claim 1, characterized by the fact that the stitching unit (50) also comprises a cutting element (94) cooperating and moving with said roller (80) about the third axis (61); and second actuating means (83, 85) for moving the cutting element (94) to and from an operating position contacting the inner surface (82) of the tire (2).

3. An inner stitching device as claimed in Claim 2, characterized by the fact that said cutting element (94) is supported on the support (62) of said roller (80); the first (70, 72) and second (83, 85) actuating means being located respectively between said support (62) and said roller (80), and between said support (62) and said cutting element (94).

4. An inner stitching device as claimed in any one of the foregoing Claims, characterized by the fact that said support (62) is rotated about said third axis (61) by said second drive means (64).

5. An inner stitching device as claimed in any one of the foregoing Claims, characterized by the fact that the stitching unit (50) also comprises heating means (97, 98, 99) cooperating and rotating with said roller (80) about the third axis (61) for heating, in use, a portion of said inner surface (82) adjacent to the point of contact between the tire (2) and the roller (80).

6. An inner stitching device as claimed in any one of the foregoing Claims, characterized by the fact that said first drive means (19) are reversible.

7. An inner stitching device as claimed in Claim 6, characterized by the fact that said stitching unit (50) also comprises a free wheel device (100) coaxial with the first axis (79a) and located between said roller (80) and said support (62).

8. An inner stitching device as claimed in any one of the foregoing Claims, characterized by the fact that said first drive means (19) cooperate with said forming mold (4) for rotating it and said tire (2) about said second axis (21).

9. An inner stitching device as claimed in Claim 8, characterized by the fact that said first drive means (19) present first axial lock means (31, 37) for locking said forming mold (4), in use, in a predetermined axial position.

10. An inner stitching device as claimed in Claim 8 or 9, characterized by the fact that it comprises a stitching device (20) in turn comprising a frame (27) moving to and from said first drive means (19) in a direction (22) substantially parallel to the second axis (21), supporting means (47)(48) for said stitching unit (50), located between the stitching unit (50) and said frame (27) and moving in relation to the frame (27) so as to move the stitching unit (50), substantially radially in relation to the second axis (21), to and from an operating position inside said tire (2), and first (58) and second (53) reference means fitted respectively to said frame (27) and said supporting means (47) and cooperating, in use, with said forming mold (4) for arresting the stitching unit (50) in said operating position.

11. An inner stitching device as claimed in Claim 10, characterized by the fact that said first (58) and second (53) reference means are respectively axial and radial reference means respectively cooperating axially and radially with said forming mold (4).

12. An inner stitching device as claimed in Claim 10 or 11, characterized by the fact that said stitching device (20) also comprises second lock means (52) for locking said frame (27), in user in a predetermined axial position in relation to said forming mold (4).

13. An inner stitching device as claimed in Claim 12, characterized by the fact that said second lock means (52) are fitted to said supporting means (47)(48) and cooperate with said forming mold (4) for locking it contacting said first reference means (58).

14. An inner stitching device as claimed in any one of the foregoing Claims from 10 to 13, characterized by the fact that said stitching device (20) comprises two opposed said stitching units (50) on either side of an axis substantially coinciding, in use, with said second axis (21); said two stitching units (50) presenting respective said supporting means (47, 48) on said frame (27).

15. An inner stitching device as claimed in Claim 14, characterized by the fact that said two stitching units (50) are offset along said axis coinciding, in use, with said second axis (21).

## Patentansprüche

1. Innere Heftvorrichtung (1) für Straßenfahrzeugreifen (2), wobei die Heftvorrichtung (1) mit einer ringförmigen Form (4) zum Reifenabformen zusammenwirkt und mindestens eine Hefteinheit (50) aufweist, die ihrerseits Rollenmittel (80), die eine äußere Heftfläche (81) aufweisen und sich um eine erste Achse (79a) drehen, einen Träger (62) für die genannten Rollenmittel (80) sowie erste Betätigungsmittel (70, 72) aufweisen, um die erste Achse (79a) in eine Betriebslage und aus dieser heraus zu bewegen, in welcher die genannte Heftfläche (81) die Innenfläche (82) des Reifens (2) berührt; sowie erste Antriebsmittel (19) zum Erzeugen einer ersten Relativdrehung der Hefteinheit (50) und des Reifens (2) um eine zweite Achse (21), die im wesentlichen mit der Achse (21) des Reifens (2) zusammenfällt; und zweite Antriebsmittel (64) zum Erzeugen einer zweiten Relativdrehung der Hefteinheit (50) des Reifens (2) um eine dritte Achse (61), die in Zuordnung zur genannten ersten (79a) und zweiten (21) Achse im wesentlichen quer verläuft; wobei die genannten Rollenmittel (80) eine einzige Rolle (80) aufweisen, die eine äußere Heftfläche (81) aufweist, die verhältnismäßig schmal ist, verglichen mit der Innenfläche (82) des Reifens (2).

2. Innere Heftvorrichtung wie beansprucht in Anspruch 1, dadurch **gekennzeichnet,** daß die Hefteinheit (50) auch ein Schneidelement (94) aufweist, das mit der genannten Rolle (80) zusammenwirkt und sich bewegt um die dritte Achse (61); sowie zweite Betätigungsmittel (83, 85), um das Schneidelement (94) in eine Betriebslage und aus dieser heraus zu bewegen, in welcher es die Innenfläche (82) des Reifens (2) berührt.

3. Innere Heftvorrichtung wie beansprucht in Anspruch 2, dadurch **gekennzeichnet,** daß das genannte Schneidelement (94) am Träger (62) der genannten Rolle (80) getragen ist; wobei die ersten (70, 72) und zweiten (83, 85) Betätigungsmittel zwischen dem genannten Träger (62) und der genannten Rolle (80) bzw. zwischen dem genannten Träger (62) und dem genannten Schneidelement (94) angeordnet sind.

4. Innere Heftvorrichtung wie beansprucht in irgendeinem der vorangehenden Ansprüche, dadurch **gekennzeichnet,** daß der genannte Träger (62) durch die genannten zweiten Antriebsmittel (64) um die genannte dritte Achse (61) gedreht wird.

5. Innere Heftvorrichtung wie beansprucht in irgendeinem der vorangehenden Ansprüche, dadurch **gekennzeichnet,** daß die Hefteinheit (50) auch Beheizungsmittel (97, 98, 99) aufweist, die zusammen mit der genannten Rolle (80) zusammenwirken und sich um die dritte Achse (61) drehen, um im Gebrauch einen Abschnitt der genannten Innenoberfläche (82) nahe dem Berührungspunkt zwischen dem Reifen (2) und der Rolle (80) zu beheizen.

6. Innere Heftvorrichtung wie beansprucht in irgendeinem der vorangehenden Ansprüche, dadurch **gekennzeichnet,** daß die genannten ersten Antriebsmittel (19) umkehrbar sind.

7. Innere Heftvorrichtung wie beansprucht in Anspruch 6, dadurch **gekennzeichnet,** daß die genannte Hefteinheit (50) auch eine Freilaufvorrichtung (100) koaxial zur ersten Achse (79a) aufweist, die zwischen der genannten Rolle (80) und dem genannten Träger (62) angeordnet ist.

8. Innere Heftvorrichtung wie beansprucht in irgendeinem der vorangehenden Ansprüche, dadurch **gekennzeichnet,** daß die ersten Antriebsmittel (19) mit der genannten Form (4) zum Abformen zusammenwirken, um diese und den genannten Reifen (2) um die genannte zweite Achse (21) zu drehen.

9. Innere Heftvorrichtung wie beansprucht in Anspruch 8, dadurch **gekennzeichnet,** daß die genannten ersten Antriebsmittel (19) feste axiale Sperrmittel (31, 37) darbieten, um die genannte Form (4) zum Abformen im Gebrauch in einer vorbestimmten axialen Lage zu verriegeln.

10. Innere Heftvorrichtung wie beansprucht in Anspruch 8 oder 9, dadurch **gekennzeichnet,** daß sie eine Heftvorrichtung (20) aufweist, die ihrerseits einen Rahmen (27) aufweist, der sich zu den genannten ersten Antriebsmitteln (19) hin und von diesen weg in einer Richtung (22) bewegt, die im wesentlichen parallel ist zur zweiten Achse (21), Tragmittel (47)(48) für die genannte Hefteinheit (50), die zwischen der Hefteinheit (50) und dem genannten Rahmen (27) angeordnet sind und sich in Zuordnung zum Rahmen (27) so bewegen, daß die Hefteinheit (50) im wesentlichen radial in Zuordnung zur zweiten Achse (21) zu einer Betriebslage innerhalb des genannten Reifens (2) hin und von dieser weg bewegt wird, sowie erste (58) und zweite (53) Bezugsmittel, die am genannten Rahmen (27) bzw. an den genannten Tragmitteln (47) passend angebracht sind und im Gebrauch mit der genannten Form (4) zum Abformen zusammenwirken, um die Hefteinheit (50) in der genannten Betriebslage zu arretieren.

11. Innere Heftvorrichtung wie beansprucht in Anspruch 10, dadurch **gekennzeichnet,** daß die ersten (58) und zweiten (53) Bezugsmittel axiale bzw. radiale Bezugsmittel sind, die axial bzw. radial mit der genannten Form (4) zum Abformen zusammenwirken.

12. Innere Heftvorrichtung wie beansprucht in Anspruch 10 oder 11, dadurch **gekennzeichnet,** daß die genannte Heftvorrichtung (20) auch zweite Sperrmittel (52) aufweist, um den genannten Rahmen (27) in einer vorbestimmten axialen Lage in Zuordnung zur genannten Form (4) zum Abformen zu verriegeln.

13. Innere Heftvorrichtung wie beansprucht in Anspruch 12, dadurch **gekennzeichnet,** daß die genannten zweiten Sperrmittel (52) an den genannten Tragmitteln (47)(48) passend angebracht sind und mit der genannten Form (4) zum Abformen zusammenwirken, um sie bei der Berührung mit den ersten Bezugsmitteln (58) zu verriegeln.

14. Innere Heftvorrichtung wie beansprucht in irgendeinem der vorangehenden Ansprüche von 10 bis 13, dadurch **gekennzeichnet,** daß die genannte Heftvorrichtung (20) zwei genannte gegenüberliegende Hefteinheiten (50) auf jeder Seite einer Achse aufweist, die im Gebrauch im wesentlichen mit der genannten zweiten Achse (21) zusammenfällt; wobei die genannten beiden Hefteinheiten (50) die genannten Tragmittel (47, 48) jeweils am genannten Rahmen (27) aufweisen.

15. Innere Heftvorrichtung wie beansprucht in Anspruch 14, dadurch **gekennzeichnet,** daß die beiden Hefteinheiten (50) längs der Achse versetzt sind, die im Betrieb mit der genannten zweiten Achse (21) zusammenfällt.

## Revendications

1. Dispositif de fixation de l'intérieur (1) de pneumatiques (2) de véhicule routier, le dispositif de fixation (1) concourant avec un moule (4) de façonnage de pneumatique annulaire (4) et comprenant au moins une unité de fixation (50), comprenant à son tour des moyens formant rouleaux (80) ayant une surface de fixation extérieure (81) et tournant autour d'un premier axe (79a), un support (62) pour ces moyens formant rouleaux (80), et des premiers moyens de manoeuvre (70, 72) pour déplacer le premier axe (79a) vers et à partir d'une position de fonctionnement dans laquelle ladite surface de fixation (81) touche la surface intérieure (82) du pneumatique (2) ; et des premiers moyens de commande (19) pour créer une première rotation relative de l'unité de fixation (50) et du pneumatique (2) par rapport à un deuxième axe (21) coïncidant sensiblement avec l'axe (21) du pneumatique (2) ; des deuxièmes moyens de commande (64) pour créer une deuxième rotation relative de l'unité de fixation (50) et du pneumatique (2) par rapport à un troisième axe sensiblement transversal (61) relativement à ces premier (79a) et deuxième (21) axes ; lesdits moyens formant rouleaux (80) comprenant un simple rouleau (80) ayant une surface de fixation extérieure (81) relativement étroite comparée à ladite surface intérieure (82) du pneumatique (2).

2. Dispositif pour la fixation de l'intérieur selon la revendication 1, caractérisé par le fait que l'unité de fixation (50) comprend également un élément de découpe (94) concourant et se déplaçant avec ledit rouleau (80) autour du troisième axe (61) ; et des deuxièmes moyens de manoeuvre (83, 85) pour déplacer l'élément de découpe (94) vers et à partir d'une position de fonctionnement touchant la surface intérieure (82) du pneumatique (2).

3. Dispositif pour la fixation de l'intérieur selon la revendication 2, caractérisé par le fait que ledit élément de découpe (94) est supporté sur le support (62) dudit rouleau (80) ; les premier (70, 72) et deuxième (83, 85) moyens de manoeuvre étant situés respectivement entre ledit support (62) et ledit rouleau (80), et entre ledit support (62) et ledit élément de découpe (94).

4. Dispositif pour la fixation de l'intérieur selon l'une quelconque des revendications précédentes, caractérisé par le fait que ledit support (62) est mis en rotation autour du troisième axe (61) par lesdits deuxièmes moyens de commande (64).

5. Dispositif pour la fixation de l'intérieur selon l'une quelconque des revendications précédentes, caractérisé par le fait que l'unité de fixation (50) comprend également des moyens de chauffage (97, 98, 99) concourant et tournant avec ledit rouleau (80) autour du troisième axe (61) pour chauffer, lors de l'utilisation, une partie de ladite surface intérieure (82) adjacente au point de contact entre le pneumatique (2) et le rouleau (80).

6. Dispositif pour la fixation de l'intérieur selon l'une quelconque des revendications précédentes, caractérisé par le fait que lesdits premiers moyens de commande (19) sont réversibles.

7. Dispositif pour la fixation de l'intérieur selon la revendication 6, caractérisé par le fait que ladite unité de fixation (50) comprend aussi un dispositif à roue libre (100) coaxial au premier axe (79a) et situé entre ledit rouleau (80) et ledit support (62).

8. Dispositif pour la fixation de l'intérieur selon l'une quelconque des revendications précédentes, caractérisé par le fait que lesdits premiers moyens de commande (19) concourent avec le moule de façonnage (4) pour le mettre en rotation ainsi que ledit pneumatique (2) autour du deuxième axe (21).

9. Dispositif pour la fixation de l'intérieur selon la revendication 8, caractérisé par le fait que lesdits premiers moyens de commande (19) présentent des premiers moyens de blocage axiaux (31, 37) pour bloquer ledit moule de façonnage (4), lors de l'utilisation, dans une position axiale prédéterminée.

10. Dispositif pour la fixation de l'intérieur selon la revendication 8 ou 9, caractérisé par le fait qu'il comprend un dispositif de fixation (20) comprenant à son tour un cadre (27) se déplaçant vers et à partir des premiers moyens de commande (19) dans un sens (22) sensiblement parallèle au deuxième axe (21), des moyens de support (47) (48) pour ladite unité de fixation (50), situés entre l'unité de fixation (50) et ledit cadre (27) et se déplaçant relativement au cadre (27) afin de déplacer l'unité de fixation (50), sensiblement radialement par rapport au deuxième axe (21), vers et à partir d'une position de fonctionnement à l'intérieur de ce pneumatique (2), et des premier (58) et deuxième (53) moyens de référence ajustés respectivement à ce cadre (27) et à ces moyens de support (47) et concourant, lors de l'utilisation, avec ledit moule de façonnage (4) pour retenir l'unité de fixation (50) dans ladite position de fonctionnement.

11. Dispositif de fixation de l'intérieur selon la revendication 10, caractérisé par le fait que lesdits premier (58) et deuxième (53) moyens de référence sont respectivement axiaux et les moyens de référence axiaux concourent respectivement axialement et radialement avec ledit moule de façonnage (4).

12. Dispositif de fixation de l'intérieur selon la revendication 10 ou 11, caractérisé par le fait que ledit dispositif de fixation (20) comprend aussi des deuxièmes moyens de blocage (52) pour bloquer ledit cadre (27) , lors de l'utilisation, dans une position axiale prédéterminée relativement au moule de façonnage (4).

13. Dispositif de fixation de l'intérieur selon la revendication 12, caractérisé par le fait que lesdits deuxièmes moyens de blocage (52) sont ajustés aux moyens de support (47) (48) et concourent avec ledit moule de façonnage (4) pour le bloquer en touchant lesdits premiers moyens de référence (58).

14. Dispositif de fixation de l'intérieur selon l'une quelconque des revendications précédentes de 10 à 13, caractérisé par le fait que ledit dispositif de fixation (20) comprend deux de ces unités de fixation opposées (50) sur les deux côtés d'un axe coïncidant sensiblement, lors de l'utilisation, avec ledit deuxième axe (21) ; ces deux unités de fixation (50) présentant des moyens de support respectifs (47, 48) sur ledit cadre (27).

15. Dispositif de fixation de l'intérieur selon la revendication 14, caractérisé par le fait que ces deux unités de fixation (50) sont décalées le long dudit axe coïncidant, lors de l'utilisation, avec ledit deuxième axe (21).
